# EUROPEAN PATENT APPLICATION

(11) **EP 4 389 576 A1**
(43) Date of publication of application: **26.06.2024**
(21) Application number: 22858735.8
(22) Date of filing: 17.08.2022
(51) Int. Cl.: B62K 15/00, B62K 21/22, B62K 3/00

(54) **ELECTRIC SCOOTER FOLDING STRUCTURE FACILITATING PORTABILITY**

(30) Priority: 20.08.2021 KR 20210110156
(71) Applicant: Seojin Automotive Co., Ltd., Gyeonggi-do 15078 (KR)
(72) Inventor: KIM, Jae Hyong, Incheon 21994 (KR); LIM, Jong Dae, Anyang-si Gyeonggi-do 14067 (KR); SONG, Jun Ho, Pyeongtaek-si Gyeonggi-do 17855 (KR)
(74) Representative: Jacobacci Coralis Harle
(86) International application number: PCT/KR2022/012255
(87) International publication number: WO 2023/022498

(57) **Abstract**

The present invention relates to a foldable structure for an easy-to-carry electric scooter comprising: an operating handle including two grips; a handle post which is attached to a lower part of the operating handle and at the bottom of which a front wheel is drivably installed; and a footrest which is connected to the bottom of the handle post at the rear of the front wheel and has a rear wheel installed at the rear end thereof, wherein the handle post has a carrying handle for hand gripping when carrying the scooter, the carrying handle being retractably built in the handle post at one side thereof; wherein the carrying handle is positioned at the front-sided width-directional center of the upper post, in order to ensure that an imaginary line connecting a support point of the front wheel in contact with the ground and a gripping point of the carrying handle passes through the center of gravity of the electric scooter, in a state of pulling out and extending the upper post from the middle post when carrying the electric scooter, and thereby the electric scooter does not rotate and remains stable even when subjected to vibrations or impacts; wherein a groove is formed in the front-sided center of the upper post into which the carrying handle is received; wherein one end of the carrying handle is hinged inside the groove such that a gripping portion of the carrying handle can be rotated and extracted; and wherein the gripping portion can be formed to include a stepped portion on one side, which is catchable to facilitate extraction.

## Description

### FIELD OF THE INVENTION

The present invention relates to an electric scooter, and more specifically, to a foldable structure for electric scooter that is easy to carry.

### BACKGROUND OF THE INVENTION

Traditional scooters are mobility devices that are propelled by the propulsive force generated by resting one foot on a footrest while kicking the ground with the other. The scooters were originally used as play devices for children, but recently, have been widely used by adults as well for transportation and leisure purposes.

However, in these traditional scooters propulsive force is generated solely by kicking the ground with one foot, and thus the scooters, when used for an extended period, lead to user fatigue, making it difficult to travel long distances. Therefore, electric scooters, where the wheels are automatically rotated by a motor, have been widely used recently.

In this way, electric scooters have the advantage of easy long-distance travel and use convenience, particularly in terms of charging. However, electric scooters are quite heavy due to their structure, and thus have the disadvantage of being less easily carryable when not in use.

To address the inconvenience of carrying, typical electric scooters are configured so that a handle post can be folded relative to the footrest, making it convenient to fold and carry when not in use.

For example, Korean Patent No. 10-1938094 discloses a carryable structure for a foldable electric scooter. In this patent, the electric scooter is configured to be carryable by allowing the saddle shaft and the board body to be folded by rotating separately around the handle post. Accordingly, this configuration enables users to carry the scooter by holding the handle on the top of the handle post and pulling the front wheel while standing when not in use.

However, in the case of these electric scooters, the handle post and the board body are folded while maintaining their lengths, resulting in folded electric scooters with large volumes that are difficult to carry.

Furthermore, in a typical electric scooter, the handle post is rotatably supported with respect to the footrest, i.e., the board body, for steering, as described in the above patent. Due to this structure, when transporting a folded electric scooter by holding its handle, the high center of gravity of the folded scooter can cause the handle post to easily rotate even with a small impact or shaking. Accordingly, the typical electric scooter poses the disadvantage of making it difficult to carry.

Therefore, it is required to develop a carryable structure for an electric scooter that can more effectively control the rotation of the handle post in response to vibrations or impacts when transporting the electric scooter by dragging the wheels in a folded state.

### DETAILED DESCRIPTION OF THE INVENTION

### TECHNICAL PROBLEM

Accordingly, the present invention has been made to remedy the above-mentioned problems of the state of the art, and an objective of the present invention is to provide a foldable structure for an easy-to-carry electric scooter that significantly reduces the volume of the electric scooter when folded and prevents rotation of the handle post even under vibrations or impacts.

### MEANS FOR SOLVING THE PROBLEM

An aspect of the present invention for achieving the above object provides a foldable structure for an easy-to-carry electric scooter comprising: an operating handle including two grips; a handle post which is attached to a lower part of the operating handle and at the bottom of which a front wheel is drivably installed; and a footrest which is connected to the bottom of the handle post at the rear of the front wheel and has a rear wheel installed at the rear end thereof, wherein the handle post has a multi-stage expansion and contraction structure to maintain the longest length during driving, the middle length during carrying, and the shortest length during storing, and wherein the handle post has a carrying handle for hand gripping when carrying the scooter, the carrying handle being retractably built in the handle post at one side thereof.

According to another aspect of the invention, the handle post is a three-stage expansion and contraction structure comprising at least an upper post, a middle post, and a lower post; wherein the upper post is inserted into the middle post, where the upper post can be pushed in and contracted or pulled out and extended with respect to the middle post; wherein the middle post is inserted into the lower post, where the middle post can be pushed in and contracted or pulled out and extended with respect to the lower post; and wherein the lower post is configured to be foldable with respect to the footrest. Furthermore, the footrest has at least a two-stage folding structure configured to enable a rear board to rotate and overlap the upper surface of a front board; and the grips of the operating handle are configured to rotate and align parallel to each other in one direction, enabling the grips to gather at the rear of the footrest when the lower post is folded.

According to further aspect of the invention, the carrying handle is positioned at the front-sided width-directional center of the upper post, in order to ensure that an imaginary line connecting a support point of the front wheel in contact with the ground and a gripping point of the carrying handle passes through the center of gravity of the electric scooter, in a state of pulling out and extending the upper post from the middle post when carrying the electric scooter. As a result, the electric scooter does not rotate and remains stable even when subjected to vibrations or impacts. Further, a groove is formed in the front-sided center of the upper post into which the carrying handle is received. One end of the carrying handle is hinged inside the groove such that a gripping portion of the carrying handle can be rotated and extracted. Furthermore, the gripping portion can be formed to include a stepped portion on one side, which is catchable to facilitate extraction.

### THE EFFECT OF THE INVENTION

According to the above-described features, the present invention has the advantage of being able to greatly reduce the volume of the electric scooter when folded, thus making it convenient to store and carry.

Furthermore, according to the present invention, when transporting by dragging the wheels in a folded state, the imaginary line which connects the support point of the front wheel in contact with the ground and the gripping point of the carrying handle passes through the center of gravity of the electric scooter. Therefore, the present invention can provide a foldable structure for an easy-to-carry electric scooter in which the handle post does not rotate even in the event of vibrations or impacts, and which is stable.

### BRIEF DESCRIPTION OF THE DRAWINGS

Figure 1 shows an external perspective view of an exemplary form of an electric scooter according to the present invention;
Figure 2 shows a partially enlarged cross-sectional view of the electric scooter according to Figure 1;
Figures 3a to 3c sequentially show the folding processes of the electric scooter according to Figure 1, wherein Figure 3a shows the first folding stage of folding processes of the electric scooter, Figure 3b shows the second stage of folding processes of the electric scooter, and Figure 3c shows the third stage of folding processes of the electric scooter.
Figure 4 shows the state of the electric scooter according to Figure 1 when carried.

### MODE FOR CARRYING OUT THE INVENTION

Hereinafter, preferred embodiments of the present invention will be described with reference to the accompanying drawings.

In the following embodiments, portions excluding inevitable portions in the explanation of the invention, the illustration and explanation thereof are omitted, and the same reference numerals are assigned to the same or similar elements throughout the description and detailed explanation thereof will be omitted without repetition.

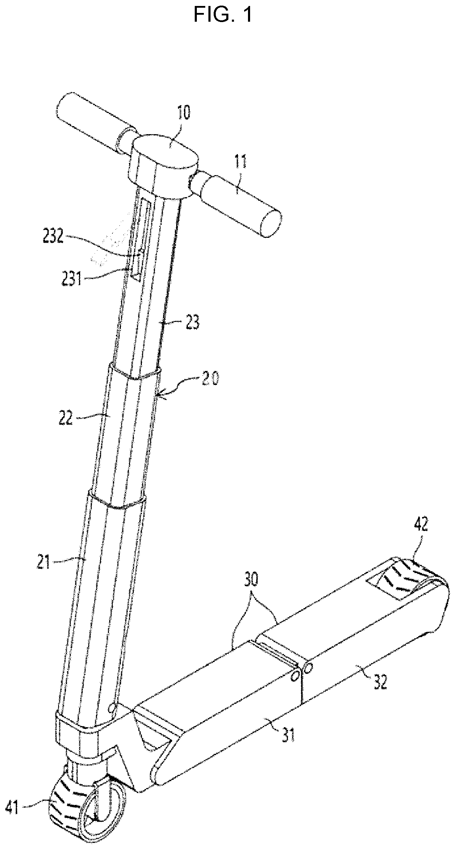

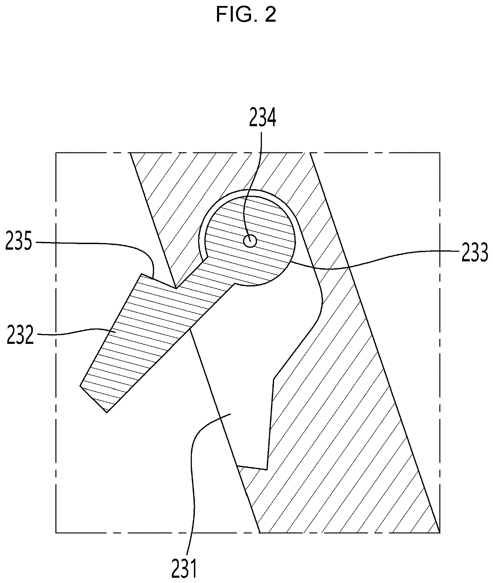

Figure 1 shows an external perspective view of the electric scooter according to the present invention, and Figure 2 shows a partially enlarged cross-sectional view of Figure 1. Basically, the electric scooter of the present invention features a foldable structure, and includes an operating handle 10 comprising grips 11, a handle post 20 that supports the operating handle 11 at the bottom part of the operating handle and includes a front wheel 41 driveably installed at its bottom, and a footrest 30 that is connected to the bottom of the handle post 20 at the rear of the front wheel 41 and includes a rear wheel 42 installed at its rear end.

In the structure of the electric scooter according to the present invention, the handle post 20 can be configured to be provided with a multi-stage expansion and contraction structure. For instance, as illustrated in Figure 1, the handle post 20 can have a three-stage structure consisting of a lower post 21, a middle post 22, and an upper post 23. The upper post 23 can be configured to contract as it is inserted into the middle post 22 and to extend as it is pulled out from the middle post. Additionally, the middle post 22 can be configured to contract as it is inserted into the lower post 21 and extend as it is pulled out from the lower post.

This three-stage expansion and contraction structure of the handle post, during the operation of the electric scooter, maintains the longest length with the lower post 21, middle post 22, and upper post 23 all extended. Further, when carrying the electric scooter in a folded state, the middle post 22 is inserted into the lower post 21 and the handle post maintains the middle length, and when the electric scooter is not in operation and being stored, the middle post 22 and the upper post 23 are all inserted into the interior of the lower post 21 and the handle post maintains the shortest length.

Meanwhile, in the above exemplary description, the handle post 20 is shown and described as a three-stage structure comprising a lower post 21, a middle post 22, and an upper post 23. However, the electric scooter of the present invention is not limited to a three-stage structure and can encompass a handle post with a multi-stage expansion and contraction structure, including two stages, four stages, or more.

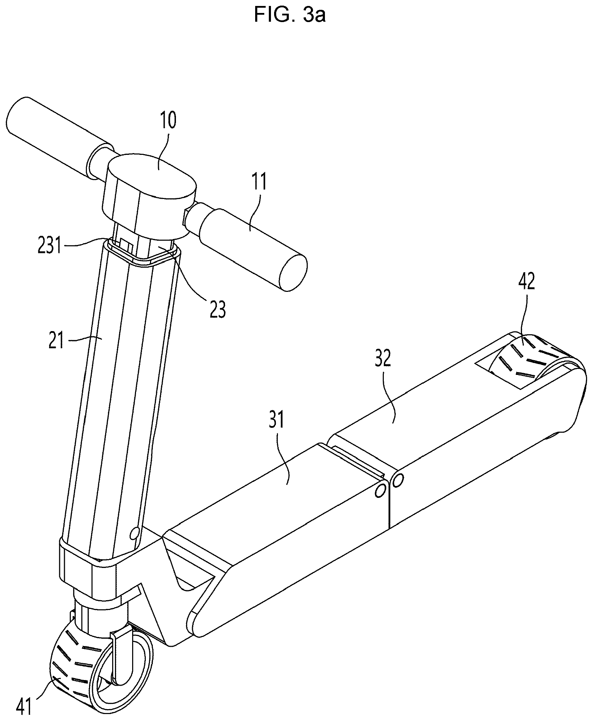

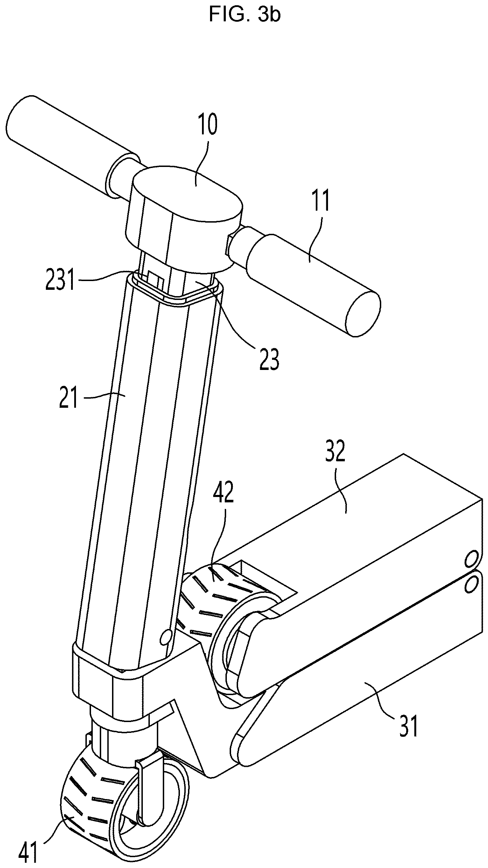

In this embodiment, the operating handle 10 is configured to be connected to the upper end of the upper post 23, and the front wheel 41 is configured to be connected to the lower end of the lower post 21. The grips 11 provided on both sides of the operating handle 10 can be configured to be rotate around the center of the handle 10 such that the grips are align parallel to each other in one direction, preferably in the rearward direction, when carrying and storing the electric scooter. Furthermore, the footrest 30 preferably has a folding structure of at least two stages or more for reducing the overall size of the electric scooter during carrying. In this case, as shown in Figure 3b, a front board 31 and a rear board 32 of the footrest can be configured such that the rear board 32 is positioned on the upper surface of the front board 31 by rotating the rear board.

In addition, the handle post 20 is configured to be foldable with respect to the footrest 30. The upper post 23 is inserted into the middle post 22, and then the middle post 22 is inserted into the lower post 21, thereby maintaining the shortest length of the handle post. In this state, by folding the lower post 21 to be overlapped over the upper surface of the rear board 32 of the folded footrest 30, the handle post can be folded with respect to the footrest.

To enable users to carry the electric scooter in a folded state with a minimal size, the electric scooter, which features a foldable structure according to the present invention, includes a carrying handle 232 of a certain size on one side of the handle post 20.

In particular, when grasping the carrying handle 232 in the folded state for carrying the electric scooter, it is important to ensure that an imaginary line connecting the support point of the front wheel 41 in contact with the ground and the gripping point of the carrying handle 232 passes through the center of gravity of the electric scooter. To achieve this, it is important to install the carrying handle 232 on the outer surface of the upper post 23, preferably at the front-sided width-directional center of the upper post 23.

Additionally, it is desirable to install the carrying handle 232 so that the carrying handle 232 is received into the surface of the upper post 23. In this case, it is desirable to form a lengthwise groove 231 of a certain depth at the center of the front surface of the upper post 23 and insert the carrying handle 232 into the groove 231. The carrying handle 232 is fixed to a hinge point 233 within the groove 231 such that a base portion 233 is pivotally rotated about the hinge point 234, and thus can be pulled out from the inside to the outside of the groove 231 by rotating the carrying handle 232 about the hinge point 234. In order to pull out the carrying handle 232 from the groove 231, the carrying handle can be configured to form at least a catchable portion, such as a stepped portion 235, on its gripping part.

Now, the folding process of the electric scooter of the present invention will be explained based on the configurations described above.

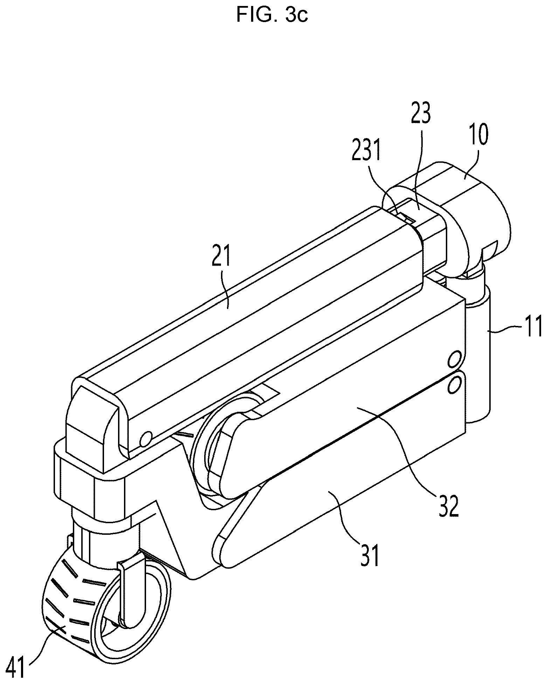

Figure 3 shows the folding sequence of the electric scooter of the present invention, wherein Figure 3a illustrates the first stage of folding the electric scooter, Figure 3b illustrates the second stage of folding the electric scooter, and Figure 3c illustrates the third stage of folding the electric scooter.

Firstly, as illustrated in Figure 3a, in a state where the carrying handle 232 is inserted into the groove 231 of the upper post 23, the upper post 23 is pushed into the middle post 22, and then the middle post 22 is pushed into the lower post 21, thereby to minimize the height of the handle post 20.

Next, as illustrated in FIG. 3b, the rear board 32 of the footrest 30 is rotated and placed to overlap on the upper surface of the front board 31. Then, as illustrated in Figure 3c, the lower post 21 is folded and placed to overlap on the upper surface of the rear board 32. The grips 11 of the operating handle 10 are then folded downward to be gathered together at the rear of the folded footrest 30. In this folded state, the electric scooter of the present invention maintains a minimal size for storage or carrying.

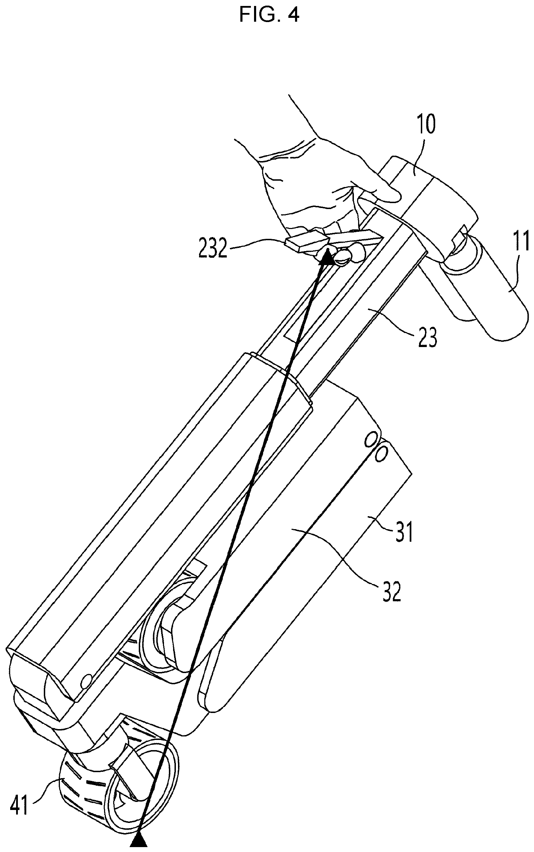

Meanwhile, in order to carry the electric scooter in its minimally folded state as above, the upper post 23 is pulled out from the middle post 22 and extended, as shown in Figure 4. Afterward, the carrying handle 232 inserted into the groove 231 in the upper post 23 is pulled out and gripped for carrying. In this state, the electric scooter is pulled using the front wheel 41 while standing in an inclined position.

In this case, as shown in FIG. 4, the imaginary line which connects the gripping point of the carrying handle 232 and the support point of the front wheel 41 in contact with the ground passes through the center of gravity of the electric scooter. This design ensures that, even there is shaking due to vibrations or impacts during carrying, minimal twisting moment acts, preventing the scooter from rotating and quickly maintaining its position. As a result, this invention allows for stable and shake-free carrying of the electric scooter during carrying, without exerting excessive force on the wrist.

Although various embodiments of the present invention have been described above, the embodiments have been described so far are merely illustrative of some of the preferred embodiments of the present invention, and the scope of the present invention is not limited by the embodiments described above, except for the appended claims. Accordingly, it is understood that those having ordinary knowledge in the same technical field can make many changes, modifications and substitutions of equivalents without departing from the technical spirit and gist of the invention within the scope of the following claims.

### LIST OF REFERENCE NUMERALS

- 10 :: Operating handle
- 11 :: Grip
- 20 :: Handle post
- 21 :: Lower post
- 22 :: Middle post
- 23 :: Upper post
- 30 :: Footrest
- 31 :: Front board
- 32 :: Rear board
- 41 :: Front wheel
- 42 :: Rear wheel
- 231 :: Groove
- 232 :: Carrying handle (Gripping part)
- 233 :: Base portion
- 234 :: Hinge point
- 235 :: Stepped portion

## Claims

1. An electric scooter comprising:
an operating handle including two grips;
a handle post which is attached to a lower part of the operating handle and at the bottom of which a front wheel is drivably installed; and
a footrest which is connected to the bottom of the handle post at the rear of the front wheel and has a rear wheel installed at the rear end thereof,
wherein the handle post has a multi-stage expansion and contraction structure to maintain the longest length during driving, the middle length during carrying, and the shortest length during storing, and
wherein the handle post has a carrying handle for hand gripping when carrying the scooter, the carrying handle being retractably built in the handle post at one side thereof.

2. An electric scooter according to claim 1, wherein the handle post is a three-stage expansion and contraction structure comprising at least an upper post, a middle post, and a lower post;
wherein the upper post is inserted into the middle post, where the upper post can be pushed in and contracted or pulled out and extended with respect to the middle post;
wherein the middle post is inserted into the lower post, where the middle post can be pushed in and contracted or pulled out and extended with respect to the lower post; and
wherein the lower post is configured to be foldable with respect to the footrest.

3. An electric scooter according to claim 1 or 2, wherein the footrest has at least a two-stage folding structure configured to enable a rear board to rotate and overlap the upper surface of a front board; and wherein the grips of the operating handle are configured to rotate and align parallel to each other in one direction, enabling the grips to gather at the rear of the footrest when the lower post is folded.

4. An electric scooter according to claim 2, wherein the carrying handle is positioned at the front-sided width-directional center of the upper post, in order to ensure that an imaginary line connecting a support point of the front wheel in contact with the ground and a gripping point of the carrying handle passes through the center of gravity of the electric scooter, in a state of pulling out and extending the upper post from the middle post when carrying the electric scooter, and thereby the electric scooter does not rotate and remains stable even when subjected to vibrations or impacts.

5. An electric scooter according to claim 4, wherein a groove is formed in the front-sided center of the upper post into which the carrying handle is received; wherein one end of the carrying handle is hinged inside the groove such that a gripping portion of the carrying handle can be rotated and extracted; and wherein the gripping portion can be formed to include a stepped portion on one side, which is catchable to facilitate extraction.
